# EUROPÄISCHE PATENTSCHRIFT

(11) **EP 4 107 931 B1**
(45) Veröffentlichungstag und Bekanntmachung des Hinweises auf die Patenterteilung: **23.07.2025**
(21) Anmeldenummer: 21705154.9
(22) Anmeldetag: 11.02.2021
(51) Int. Cl.: H04L 69/08, H04L 67/12, H04L 69/18, H04L 67/51

(54) **VORRICHTUNG UND VERFAHREN ZUM VERBINDEN EINES SERVICEORIENTIERTEN GERÄTS MIT EINEM SIGNALBASIERTEN GERÄT**
DEVICE AND METHOD FOR CONNECTING A SERVICE-ORIENTED DEVICE TO A SIGNAL-BASED DEVICE
DISPOSITIF ET PROCÉDÉ DE CONNEXION D'UN DISPOSITIF ORIENTÉ SERVICE À UN DISPOSITIF BASÉ SUR DES SIGNAUX

(30) Priorität: 19.02.2020 DE 102020104405
(43) Veröffentlichungstag der Anmeldung: 28.12.2022
(73) Patentinhaber: HELLA GMBH & CO. KGAA, 59552 Lippstadt (DE)
(72) Erfinder: HENSCHEL, Felix, 59425 Unna (DE); MAY-JOHANN, Niklas, 59557 Lippstadt (DE)
(74) Vertreter: Behr-Wenning, Gregor
(86) Internationale Anmeldenummer: PCT/EP2021/053275
(87) Internationale Veröffentlichungsnummer: WO 2021/165127

(56) Entgegenhaltungen:
- US-A1- 2017 063 971
- US-A1- 2018 189 103
- US-A1- 2019 126 858

## Beschreibung

Zur Kommunikation von Geräten eines Fahrzeugs untereinander, wird vermehrt eine sogenannte "serviceorientierte Architektur" eingesetzt, bei der verschiedene Kommunikationsdaten als sogenannte "Services" bzw. Dienste verwaltet, also angefordert und bereitgestellt werden. Derartige Services bieten den Vorteil, dass diese bedarfsabhängig aktiviert oder deaktiviert und dynamisch verschiedenen Geräten zugeordnet werden können.

Um eine serviceorientierte Kommunikation in einem Fahrzeug zu ermöglichen, ist es derzeit erforderlich, jeweilige Geräte des Fahrzeugs, die an der serviceorientierten Kommunikation teilnehmen sollen, mit einem spezifischen Steuergerät auszurüsten, das serviceorientierte Kommunikationsschnittstellen und Protokolle unterstützt. Derartige Steuergeräte sind teuer müssen aufwendig an eine spezifische Fahrzeugarchitektur angepasst werden.

Die WO 2018/127790 A2 beschreibt einen serviceorientierten Server der zum Bereitstellen eines Services an ein externes Gerät in einem Fahrzeug konfiguriert ist.

US2019/126858 A1 beschreibt ein System mit Gateways, mittels derer verschiedene Netzwerke, also z.B. die Netzwerke verschiedener Fahrzeuge, untereinander Daten austauschen können. So kann z.B. ein Sensor eines ersten Netzwerks Daten an einen Aktuator einer zweiten Netzwerks bereitstellen. Dabei können die so verfügbaren Funktionalitäten als Service-Oriented Architecture (SOA) bereitgestellt werden. US2017/063971 A1 beschreibt ein System, in dem Kontrollgeräte wie z.B. ECUs, die signalbasiert sind, in einem komplexen, hierarchischen Netzwerk erkannt und nutzbar gemacht werden, wobei auch eine Protokollübersetzung von SOME/IP in ein CAN-Protokoll vorgesehen ist.

Vor diesem Hintergrund war es eine Aufgabe der vorgestellten Erfindung, eine kosteneffiziente und robuste Möglichkeit zum Implementieren einer serviceorientieren Kommunikation in einer signalbasierten Fahrzeugarchitektur bereitzustellen.

Die voranstehende Aufgabe wird gelöst durch die Merkmale der jeweiligen unabhängigen Ansprüche. Weitere Merkmale und Details der Erfindung ergeben sich aus den Unteransprüchen, der Beschreibung und den Zeichnungen.

In einem ersten Aspekt betrifft die vorgestellte Erfindung eine Vorrichtung zur serviceorientierten Kommunikation mit einer signalbasierten Hardwarearchitektur gemäß Anspruch 1.

Unter einer serviceorientierten Kommunikation ist im Kontext der vorgestellten Erfindung eine Kommunikation zu verstehen, bei der mittels eines serviceorientierten Protokolls zu Services zusammengefasste Paketdaten ausgetauscht und jeweiligen serviceorientierten Kommunikationspartnern zugeordnet werden. Die Services können bedarfsgesteuert und dynamisch verschiedenen Kommunikationspartnern zugeordnet werden, indem Kommunikationsparameter, wie bspw. eine Zieladresse oder eine Bandbreite angepasst werden.

Unter einer signalbasierten Hardwarearchitektur ist im Kontext der vorgestellten Erfindung eine Anzahl Geräte zu verstehen, die mittels fest vorgegebener Kommunikationsparameter Kommunikationssignale austauschen.

Unter einer Routinglogik ist im Kontext der vorgestellten Erfindung eine Zuordnung jeweiliger signalbasierter Kommunikationsschnittstellen zu jeweiligen signalbasierten Kommunikationsschnittstellen zu verstehen. Eine vorgegebene Routinglogik kann bei Bedarf insbesondere dynamisch angepasst werden, sodass bspw. ein signalbasierter Kommunikationspartner dynamisch verschiedenen signalbasierten Kommunikationspartnern zugeordnet werden kann.

Unter einer Transformation von signalbasierten Kommunikationssignalen gemäß einem serviceorientierten Kommunikationsprotokoll in serviceorientierte Kommunikationssignale ist im Kontext der vorgestellten Erfindung ein Vorgang zu verstehen, bei dem signalbasierte Kommunikationssignale derart angepasst, d.h. bspw. neu geordnet werden, dass diese mit einem jeweiligen Kommunikationsprotokoll verarbeitet werden können. Zur Transformation von signalbasierten Kommunikationssignalen können bspw. Transformationsprotokolle eingesetzt werden, die Anleitungen umfassen, wie welche Kommunikationsdaten wo eingefügt werden sollen, um die Transformation zu vollziehen.

Unter einem eingebetteten System ist im Kontext der vorgestellten Erfindung eine Komponente zu verstehen, die sowohl Herstellerkonfigurierbare ICs wie ein ASICs als auch Anwenderkonfigurierbare ICs, insbesondere ein Prozessor umfasst. Ein eingebettetes System kann bspw. ein sogenanntes "Gateway" enthalten, das Weiterleitungsfunktionen bzw. sogenanntes "Routing" zwischen den jeweiligen Kommunikationsschnittstellen der vorgestellten Vorrichtung unterstützt. Zusätzlich zu den Weiterleitungsfunktionen unterstützt das eingebettete System der vorgestellten Vorrichtung eine Transformation von Daten bzw. Datenpakten von einem signalbasierten Kommunikationsprotokoll in ein serviceorientiertes Kommunikationsprotokoll und eine Transformation von Daten bzw. Datenpakten von einem serviceorientieren Kommunikationsprotokoll in ein signalbasiertes Kommunikationsprotokoll. Diese Transformation kann rein softwarebasiert, also durch in dem eingebetteten System ausgeführte Programme oder hardwarebasiert, also durch physische Schaltungen bzw. Schaltkreise ohne Verwendung von Software erfolgen. Selbstverständlich kann auch eine teilweise softwarebasierte und teilweise hardwarebasierte Transformation erfolgen. Ein eingebettetes System kann eine Recheneinheit sein.

Die vorgestellte Vorrichtung dient insbesondere dazu, eine bestehende und getestete signalbasierte Kommunikationsarchitektur eines Fahrzeugs einer serviceorientierten Kommunikation bzw. Kontrolle zugänglich zu machen. Dazu ist vorgesehen, dass die Vorrichtung mit jeweiligen signalbasierten externen Geräten, also jeweiligen Geräten der Kommunikationsarchitektur des Fahrzeugs, über signalbasierte Kommunikationsschnittstellen verbunden wird. Dies bedeutet, dass die externen signalbasierten Geräte mit den signalbasierten Kommunikationsschnittstellen in kommunikativer Verbindung stehen und Daten austauschen. Die signalbasierten Kommunikationsschnittstellen können bspw. zur Kommunikation über ein signalbasiertes CAN-, LIN-, oder PSl5-Protokoll konfiguriert sein.

Weiterhin ist vorgesehen, dass die vorgestellte Vorrichtung mit jeweiligen externen serviceorientierten Kommunikationspartnern, also bspw. jeweiligen Geräten einer serviceorientierten Kommunikationsarchitektur des Fahrzeugs oder einer externen Kontrollinstanz, über serviceorientierte Kommunikationsschnittstellen verbunden wird. Dies bedeutet, dass die externen serviceorientierten Kommunikationspartner mit den serviceorientierten Kommunikationsschnittstellen in kommunikativer Verbindung stehen und Daten austauschen. Die serviceorientierten Kommunikationsschnittstellen können bspw. zur Kommunikation über ein SOME/IP-Protokoll, ein SOME/IP-SD-Protokoll oder ähnliche Protokolle aus dem sogenannten "AUTOSAR" Kontext konfiguriert sein.

Die vorgestellte Vorrichtung umfasst ein eingebettetes System, insbesondere ein Gateway, mittels derer Transformationsprozesse zum Transformieren von signalbasierten Daten, also gemäß einem signalbasierten Kommunikationsprotokoll strukturierte Daten, in serviceorientierte Daten, also gemäß einem serviceorientierten Kommunikationsprotokoll strukturierte Daten transformiert werden und umgekehrt.

Ferner dient das eingebettete System zum Routen, d.h. zum Herstellen oder Trennen von Kommunikationsverbindungen zwischen jeweiligen Kommunikationsschnittstellen der vorgestellten Vorrichtung.

Die vorgestellte Vorrichtung kann mit einer vorgegebenen Routinglogik vorkonfiguriert sein, um ohne zusätzliche Anpassungen eine bestehende signalbasierte Komponente, insbesondere eine Hardwarearchitektur, für eine serviceorientierte Kommunikation vorzubereiten, d.h. "SOA-ready" zu machen. Alternativ oder zusätzlich kann die Vorrichtung mittels zusätzlicher Konfigurationsanweisungen, wie bspw. einer entsprechenden veränderbaren Routinglogik für spezielle Hardwarearchitekturen vorbereitet werden.

Es kann vorgesehen sein, dass das eingebettete System dazu konfiguriert ist, einen Angebotskatalog bereitzustellen, der eine Liste von durch die Vorrichtung bereitstellbaren Services umfasst, und das eingebettete System weiterhin dazu konfiguriert ist, den Angebotskatalog in Abhängigkeit jeweiliger mit der Vorrichtung kommunizierender externer signalbasierter Geräte unter Verwendung einer vorgegebenen Angebotszuordnungslogik dynamisch zu aktualisieren.

Mittels eines Angebotskatalogs, der jeweilige durch die Vorrichtung bereitstellbare Services umfasst, kann die Vorrichtung serviceorientiere Kommunikationsteilnehmer bedienen, d.h. jeweilige serviceorientierte Kommunikationsteilnehmer, die einen Service bei der Vorrichtung abonniert haben, mit entsprechenden Daten jeweiliger signalbasierter Geräte versorgen. Anhand des Angebotskatalogs können jeweilige serviceorientierte Kommunikationsteilnehmer ermitteln, welche Services von der Vorrichtung angeboten werden.

Eine Angebotszuordnungslogik gibt vor, welche Daten von welchen signalbasierten Geräten als welche Services angeboten werden können. Bspw. kann die Angebotszuordnungslogik vorgeben, dass Daten von einem signalbasierten Regen/Licht-Sensor zum Bereitstellen eines Dienstes "Regeninformation" und eines Dienstes "Lichtinformation" verwendet werden können. Die vorgestellte Vorrichtung kann in diesem Beispiel dazu konfiguriert sein, lediglich dann Daten von dem Regen/Licht-Sensor abzugreifen, wenn ein Dienst "Regeninformation" oder ein Dienst "Lichtinformation" von einem serviceorientierten Kommunikationspartner abonniert wurde. Entsprechend kann auf eine zyklische Datenbereitstellung durch den Regen/Licht-Sensor, unabhängig von jeweiligen Anforderungen, verzichtet werden. Durch den Verzicht auf die zyklische Datenbereitstellung werden Kommunikationsressourcen geschont und Energie gespart.

Durch eine dynamische Aktualisierung des Angebotskatalogs kann eine Liste an verfügbaren Services bspw. in Abhängigkeit einer Konfiguration und/oder eines Zustands einer aktuell mit der vorgestellten Vorrichtung verbundenen Komponente angepasst werden, sodass die Vorrichtung sich zur Verwendung an verschiedenen Komponenten bzw. Konfigurationen eignet. Dies bedeutet, dass die vorgestellte Vorrichtung universell und flexible an die verschiedenen Komponenten einsetzbar und angepasst werden kann.

Es kann weiterhin vorgesehen sein, dass das eingebettete System dazu konfiguriert ist, einen Anforderungskatalog bereitzustellen, der eine Liste von für eine vorgegebene Funktion benötigten Services umfasst, und den Anforderungskatalog in Abhängigkeit jeweiliger der vorgegebenen Funktion unter Verwendung einer vorgegebenen Anforderungszuordnungslogik dynamisch zu aktualisieren und jeweilige Daten von jeweiligen bereitgestellten Services an entsprechende externe signalbasierte Geräte gemäß der Anforderungszuordnungslogik weiterzuleiten.

Um jeweilige mit der vorgestellten Vorrichtung verbundene signalbasierte Geräte zu serviceabhängig zu steuern, kann ein Anforderungskatalog verwendet werden, der jeweilige mit Daten zu versorgende Services umfasst. Unter Verwendung einer Anforderungszuordnungslogik können jeweilige für aktuell zu versorgende Services benötigte Daten bzw. Geräte ermittelt und entsprechend gesteuert werden.

Es kann weiterhin vorgesehen sein, dass das eingebettete System dazu konfiguriert ist, jeweilige durch einen Direktverbindungskatalog vorgegebene signalbasierte Kommunikationssignale von der Anzahl signalbasierte Kommunikationsschnittstellen direkt zu jeweiligen gemäß der vorgegebenen Routinglogik vorgegebenen serviceorientierten Kommunikationsschnittstellen zu leiten.

Durch eine direkte Weiterleitung, d.h. ein sogenanntes "direct routing" von ausgewählten bzw. vorgegebenen signalbasierten Kommunikationssignalen zu jeweiligen serviceorientierten Kommunikationsschnittstellen, kann ein Direktzugriff auf entsprechende signalbasierte Geräte, d.h. ein Zugriff auf durch die signalbasierten Geräte generierte Daten ohne eine Transformation der Daten, garantiert werden. Eine derart direkte Weiterleitung ist bspw. für eine Datenerfassung mittels vorgegebener Kommunikationsprotokolle, wie bspw. Diagnosedaten im UDS-Protokoll, erforderlich.

Es kann weiterhin vorgesehen sein, dass die Vorrichtung einen Speicher umfasst, und dass das eingebettete System dazu konfiguriert ist, zyklisch bereitgestellte signalbasierte Kommunikationssignale in dem Speicher zwischenzuspeichern, und zeitlich asynchron zu den zyklisch bereitgestellten signalbasierten Kommunikationssignalen bereitzustellenden serviceorientierten Kommunikationssignalen jeweilige in dem Speicher zwischengespeicherte signalbasierte Kommunikationssignale zuzuordnen.

Um eine Transformation von gemäß einem signalbasierten Kommunikationsprotokoll bereitgestellten Daten, die bspw. zyklisch bereitgestellt werden, in ein serviceorientiertes Kommunikationsprotokoll zu ermöglichen, das Daten bedarfsorientiert bereitstellt, kann ein Speicher vorgesehen sein, der einen temporären Versatz zwischen jeweiligen Anforderungen des serviceorientierten Kommunikationsprotokolls und einem zeitlichen Ablauf des signalbasierten Kommunikationsprotokolls ausgleicht. Dies bedeutet, dass jeweilige gemäß einem signalbasierten Kommunikationsprotokoll bereitgestellte Daten bspw. solang in dem Speicher zwischengespeichert werden, bis diese von einem serviceorientieren Kommunikationsprotokoll abgerufen oder gemäß dem signalbasierten Kommunikationsprotokoll aktualisiert werden.

Es kann weiterhin vorgesehen sein, dass die Vorrichtung eine Benutzerschnittstelle zum Konfigurieren der Routinglogik und/oder der Angebotszuordnungslogik und/oder der Anforderungszuordnungslogik umfasst.

Mittels einer Benutzerschnittstelle, kann einem Nutzer eine Anpassung von Weiterleitungsregeln, also der Routinglogik und/oder der Angebotszuordnungslogik und/oder der Anforderungszuordnungslogik der vorgestellten Vorrichtung ermöglicht werden.

Es ist vorgesehen, dass das eingebettete System dazu konfiguriert ist, in Abhängigkeit eines von einem externen serviceorientierten Kommunikationspartner angeforderten serviceorientierten Kommunikationssignals ein Schaltsignal an ein jeweiliges externes signalbasiertes Gerät zu übertragen, um das jeweilige externe signalbasierte Gerät zu aktivieren oder zu deaktivieren.

Durch ein selektives Aktivieren oder Deaktivieren jeweiliger mit der vorgestellten Vorrichtung verbundener Geräte durch die Vorrichtung kann ein bedarfsabhängiges Aktivieren jeweiliger bspw. gemäß von einem Kommunikationspartner abonnierter Services benötigter Geräte erfolgen. Entsprechend wird eine Aktivität von nicht benötigten Geräten vermieden und ein Energieverbrauch einer Komponente minimiert. Weiterhin werden Kommunikationsressourcen, insbesondere der vorgestellten Vorrichtung geschont.

Unter "Aktivieren" kann eine Versorgung eines Geräts mit Elektrizität, das vorher nicht mit Elektrizität versorgt wurde oder eine Änderung eines Betriebszustands durch einen entsprechenden Steuerungsbefehl, wie bspw. ein "wake up", verstanden werden. Entsprechend kann unter "Deaktivieren" ein Trennen eines Geräts von einer Versorgung mit Elektrizität, das vorher mit Elektrizität versorgt wurde oder eine Änderung eines Betriebszustands durch einen entsprechenden Steuerungsbefehl, wie bspw. ein "standby Befehl", verstanden werden.

Es kann weiterhin vorgesehen sein, dass die Vorrichtung eine Schaltkommunikationsschnittstelle umfasst, und dass das eingebettete System dazu konfiguriert ist, das Schaltsignal über die Schaltkommunikationsschnittstelle an das jeweilige externe signalbasierte Gerät zu übertragen.

Zum Übertragen eines Schaltsignals zum Aktivieren oder Deaktivieren jeweiliger Geräte kann die vorgestellten eine Schaltkommunikationsschnittstelle, wie bspw. einen sogenannten "EN-PIN", der mit einem Schaltpin zum Aktivieren oder Deaktivieren eines jeweiligen Geräts verbunden wird, oder eine Drahtloskommunikationsschnittstelle umfassen.

In einem zweiten Aspekt betrifft die vorgestellte Erfindung ein Kommunikationssystem für ein Fahrzeug. Das Kommunikationssystem umfasst eine Anzahl signalbasierter Geräte, eine Anzahl serviceorientierter Kommunikationspartner und eine mögliche Ausgestaltung der vorgestellten Vorrichtung, wobei die Vorrichtung dazu konfiguriert ist, die Anzahl signalbasierter Geräte mit der Anzahl serviceorientierter Kommunikationspartner kommunikativ zu verbinden.

Das vorgestellte Kommunikationssystem dient insbesondere zum Betrieb der vorgestellten Vorrichtung in einem Fahrzeug.

In einem dritten Aspekt betrifft die vorgestellte Erfindung ein Verfahren zum Kontrollieren einer Kommunikation in einem Kommunikationssystem, wobei das Verfahren einen ersten Verbindungsschritt zum Verbinden einer möglichen Ausgestaltung der vorgestellten Vorrichtung mit einer Anzahl signalbasierter Geräte, einen zweiten Verbindungsschritt zum Verbinden der Vorrichtung mit einer Anzahl serviceorientierter Kommunikationspartner, und einen Kontrollschritt zum Kontrollieren einer Kommunikation der Anzahl serviceorientierter Kommunikationspartner mit der Anzahl signalbasierter Geräte mittels der Vorrichtung umfasst.

Das vorgestellte Verfahren dient insbesondere zum Betrieb der vorgestellten Vorrichtung bspw. in dem vorgestellten Kommunikationssystem.

Anhand der beigefügten Zeichnungen wird die Erfindung nachfolgend näher erläutert. Dabei zeigt:
Fig. 1 eine mögliche Ausgestaltung der vorgestellten Vorrichtung,
Fig. 2 eine weitere mögliche Ausgestaltung der vorgestellten Vorrichtung,
Fig. 3 eine mögliche Ausgestaltung des vorgestellten Kommunikationssystems,
Fig. 4 eine weitere mögliche Ausgestaltung des vorgestellten Kommunikationssystems,
Fig. 5 eine mögliche Ausgestaltung des vorgestellten Verfahrens.

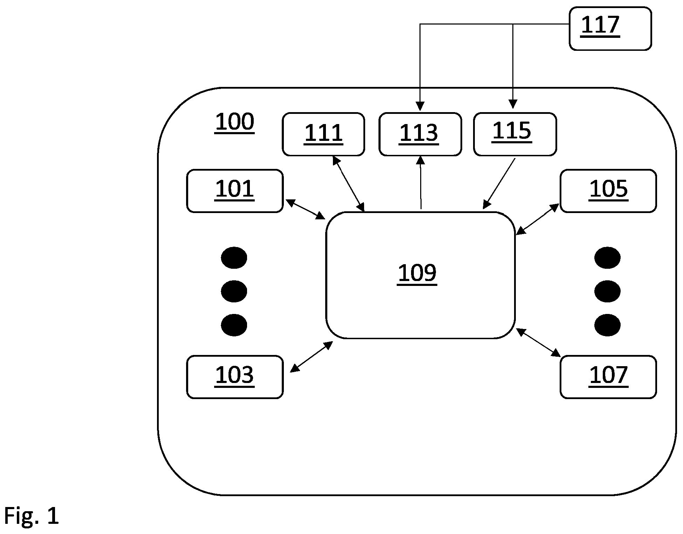

In Fig 1 ist eine Vorrichtung 100 dargestellt. Die Vorrichtung 100 umfasst eine Anzahl serviceorientierte Kommunikationsschnittstellen 101 bis 103, eine Anzahl signalbasierter Kommunikationsschnittstellen 105 bis 107 und ein eingebettetes System 109 in Form eines Gateways. Das eingebettete System 109 greift auf einen optionalen Speicher 111 zu, um dort hinterlegte Daten, wie bspw. zyklisch aktualisierte signalbasierte Daten, d.h. Daten die zyklisch von signalbasierten Geräten bereitgestellt werden, zu ermitteln.

Weiterhin umfasst das eingebettete System 109 eine Routinglogik, die vorgibt, welche signalbasierte Kommunikationsschnittstellen 105 bis 107 mit welchen signalbasierten Kommunikationsschnittstellen kommunikativ zu verbinden sind. Die Routinglogik kann sich dynamisch in Abhängigkeit jeweiliger unterstützter Services ändern.

Um einem serviceorientierten Kommunikationspartner eine Kommunikation mit der Vorrichtung 100 zu ermöglichen, stellt die Vorrichtung einen Angebotskatalog 113 bereit, der eine Liste mit durch die Vorrichtung unterstützen Services umfasst. Die Liste mit durch die Vorrichtung unterstützen Services kann sich bspw. in Abhängigkeit jeweiliger mit den signalbasierten Kommunikationsschnittstellen 105 bis 107 verbundener signalbasierter Geräte bzw. deren Betriebszustand ändern.

Das eingebettete System 109 ist dazu konfiguriert, durch die signalbasierten Kommunikationsschnittstellen 105 bis 107 bereitgestellte signalbasierte Kommunikationssignale gemäß einem serviceorientierten Kommunikationsprotokoll in serviceorientierte Kommunikationssignale zu transformieren sowie durch die jeweiligen serviceorientierten Kommunikationsschnittstellen 101 bis 103 bereitgestellte serviceorientierte Kommunikationssignale gemäß einem signalbasierten Kommunikationsprotokoll in signalbasierte Kommunikationssignale zu transformieren. Entsprechend wirkt die Vorrichtung 100 als Vermittler zwischen serviceorientierten Kommunikationspartnern und signalbasierten Geräten.

Zum direkten, d.h. nicht transformierten weiterleiten von ausgewählten Daten, wie bspw. Diagnosedaten, greift das eingebettete System 109 auf einen optionale Direktverbindungskatalog 115 zu, der vorgibt, welche signalbasierten Kommunikationsschnittstellen 105 bis 107 mit welchen serviceorientierten Kommunikationsschnittstellen 101 bis 103 direkt verbunden werden.

Die signalbasierten Kommunikationsschnittstellen 105 bis 107 können bspw. CAN-Schnittstellen zu einem CAN-Netzwerk eines Fahrzeugs sein.

Die serviceorientierten Kommunikationsschnittstellen 101 bis 103 können bspw. Ethernetschnittstellen zur Verbindung mit einem serviceorientierten Kommunikationspartner, wie bspw. einem Zentralsteuergerät sein.

Selbstverständlich können die signalbasierten Kommunikationsschnittstellen 105 bis 107 und/oder die serviceorientierten Kommunikationsschnittstellen 101 bis 103 drahtgebunden oder drahtlos ausgestaltet sein.

Der Direktverbindungskatalog 115 und der Angebotskatalog 113 können über eine optionale Benutzerschnittstelle, angepasst bzw. vorkonfiguriert bereitgestellt, d.h. bspw. in dem Speicher 111 hinterlegt werden.

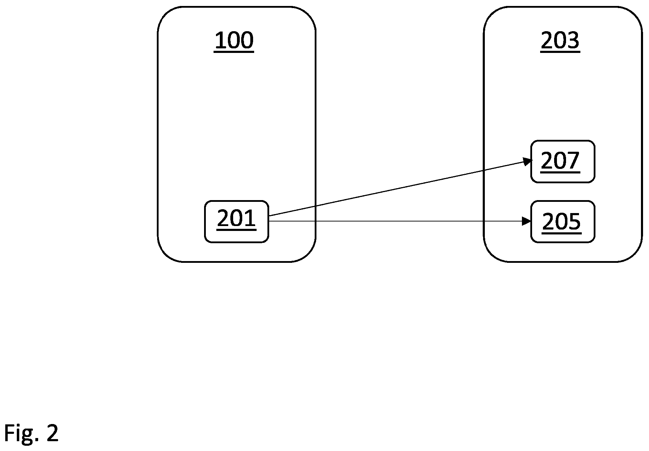

In Fig. 2 ist die Vorrichtung 100 mit einer zusätzlichen Schaltkommunikationsschnittstelle 201 in Form eines "EN-PINs" dargestellt. Mittels der Schaltkommunikationsschnittstelle 201 kann ein Aktivierungssignal oder ein Deaktivierungssignal zum Aktivieren bzw. Deaktivieren eines signalbasierten Geräts 203, wie bspw. einem Sensor oder einem Aktuator, übermittelt werden.

Das Aktivierungssignal kann bspw. eine Versorgung des Geräts 203 mit Elektrizität oder ein Steuerungsbefehl, wie bspw. ein "wake up" zum Steuern des Geräts 203 sein.

Das Deaktivierungssignal kann bspw. ein Trennen des Geräts 203 von einer Versorgung mit Elektrizität oder eine Änderung eines Betriebszustands des Geräts 203 durch einen entsprechenden Steuerungsbefehl zum Steuern des Geräts 203, wie bspw. ein "standby Befehl" sein.

Die Schaltkommunikationsschnittstelle 201 kann mit einem Energieversorgungsschalter 205 des Geräts 203 verbunden sein, um dessen Versorgung mit Elektrizität zu steuern. Alternativ oder zusätzlich kann die Schaltkommunikationsschnittstelle 201 mit einem Steuerungsschalter 207 zum Steuern eines Betriebszustands des Geräts 203 verbunden sein.

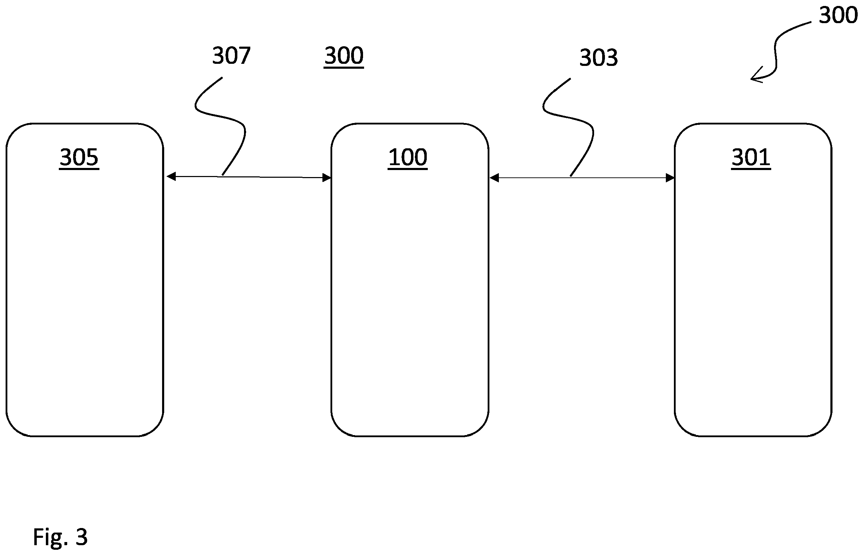

In Fig. 3 ist ein Kommunikationssystem 300. Das Kommunikationssystem 300 umfasst ein signalbasiertes Gerät 301, wie bspw. einen Sensor oder einen Aktuator und die Vorrichtung 100 gemäß Figur 1.

Die Vorrichtung 100 ist mit dem signalbasierten Gerät 301 verbunden, wie durch Pfeil 303 angedeutet. Weiterhin ist die Vorrichtung 100 mit einem serviceorientierten Kommunikationspartner verbunden 305, wie durch Pfeil 307 angedeutet. Entsprechend die die Vorrichtung 100 als Vermittler zwischen dem signalbasierten Gerät 301 und dem serviceorientierten Kommunikationspartner 305. Dazu stellt die Vorrichtung 100 dem serviceorientierten Kommunikationspartner 305 einen Angebotskatalog mit unterstützten Services bereit. Diese Services können optional zur Laufzeit über eine Schnittstelle, insbesondere eine Benutzerschnittstelle, aktualisiert werden.

In Abhängigkeit jeweiliger von dem serviceorientierten Kommunikationspartner 305 bei der Vorrichtung 100 abonnierter Services bestimmt die Vorrichtung 100 eine Routinglogik zum Weiterleiten und Transformieren von Daten des signalbasierten Geräts 301 zu dem serviceorientierten Kommunikationspartner 305 und umgekehrt.

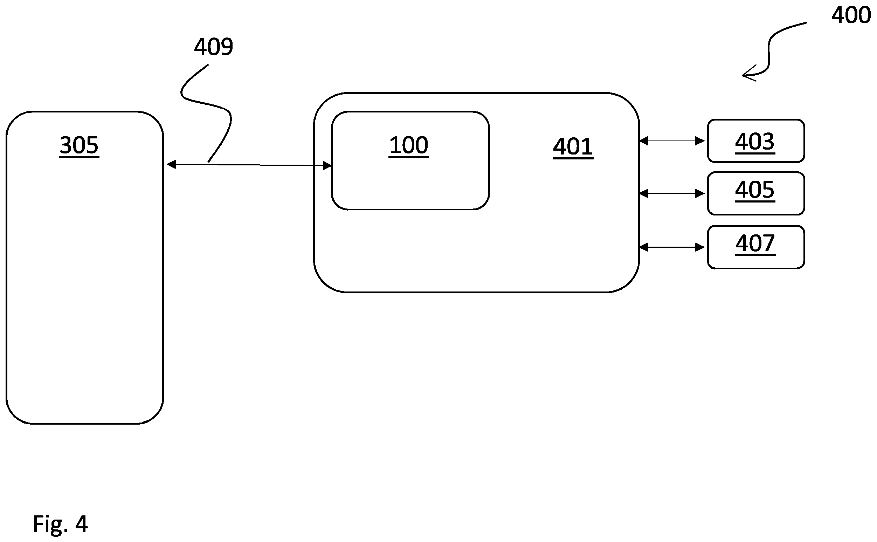

In Fig. 4 ist ein Kommunikationssystem 400 dargestellt. Das Kommunikationssystem 400 umfasst ein signalbasiertes Gerät 401, hier ein Knotensteuergerät, das mit weiteren signalbasierten Geräten 403, 405 und 407 verbunden ist und die Vorrichtung 100 gemäß Fig. 1.

Die Vorrichtung 100 ist mit einem serviceorientierten Kommunikationspartner 305 verbunden, wie durch Pfeil 409 angedeutet. Entsprechend die die Vorrichtung 100 als Vermittler zwischen dem signalbasierten Gerät 401 und, dadurch bedingt, den weiteren signalbasierten Geräten 403, 405 und 407 und dem serviceorientierten Kommunikationspartner 305. Dazu stellt die Vorrichtung 100 dem serviceorientierten Kommunikationspartner einen Angebotskatalog mit unterstützten Services bereit. Der Angebotskatalog wird in Abhängigkeit eines Betriebszustands bzw. einer Hinzufügung oder Trennung der Geräte 403, 405 und 407 von dem Gerät 401 dynamisch aktualisiert.

Die Vorrichtung 100 kann bspw. als integrierter Schaltkreis in dem signalbasierten Gerät 401 integriert oder als separates Modul mit dem signalbasierten Gerät 401 verbunden werden.

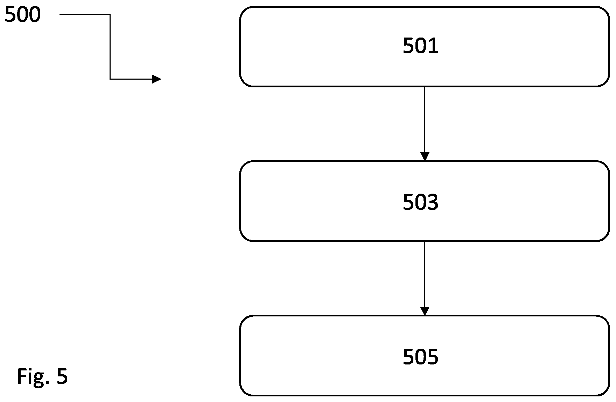

In Fig. 5 ist ein Verfahren 500 dargestellt. Das Verfahren 500 umfasst einen ersten Verbindungsschritt 501 zum Verbinden einer möglichen Ausgestaltung der vorgestellten Vorrichtung, wie bspw. Vorrichtung 100 gemäß Fig. 1, mit einer Anzahl signalbasierter Geräte, einen zweiten Verbindungsschritt 503 zum Verbinden der Vorrichtung mit einer Anzahl serviceorientierter Kommunikationspartner, und einen Kontrollschritt 505 zum Kontrollieren einer Kommunikation der Anzahl serviceorientierter Kommunikationspartner mit der Anzahl signalbasierter Geräte mittels der Vorrichtung.

### Bezugszeichenliste

- 100: Vorrichtung
- 101: serviceorientierte Kommunikationsschnittstelle
- 103: serviceorientierte Kommunikationsschnittstelle
- 105: signalbasierte Kommunikationsschnittstelle
- 107: signalbasierte Kommunikationsschnittstelle
- 109: Recheneinheit
- 111: Speicher
- 113: Angebotskatalog
- 115: Direktverbindungskatalog
- 201: Schaltkommunikationsschnittstelle
- 203: signalbasiertes Gerät
- 205: Energieversorgungsschalter
- 207: Steuerungsschalter
- 300: Kommunikationssystem
- 301: signalbasiertes Gerät
- 303: Pfeil
- 305: Kommunikationsteilnehmer
- 307: Pfeil
- 400: Kommunikationssystem
- 401: signalbasiertes Gerät
- 403: signalbasiertes Gerät
- 405: signalbasiertes Gerät
- 407: signalbasiertes Gerät
- 409: Pfeil
- 500: Verfahren
- 501: erster Verbindungsschritt
- 503: zweiter Verbindungsschritt
- 505: Kontrollschritt

## Patentansprüche

1. Vorrichtung (100) zur serviceorientierten Kommunikation eines serviceorientierten Geräts mit einer Anzahl signalbasierter Geräte (301, 401, 403, 405, 407) zu ermöglichen, wobei die Vorrichtung (100) umfasst:
- eine Anzahl serviceorientierte Kommunikationsschnittstellen (101, 103) zur kommunikativen Verbindung mit einer Anzahl externer serviceorientierter Kommunikationspartner (305),
- eine Anzahl signalbasierte Kommunikationsschnittstellen (105, 107) zur Kommunikation mit einer Anzahl externer signalbasierter Geräte (301, 401, 403, 405, 407),
- ein eingebettetes System (109),
wobei das eingebettete System (109) dazu konfiguriert ist, jeweilige signalbasierte Kommunikationsschnittstellen (105, 107) mit jeweiligen serviceorientierten Kommunikationsschnittstellen (101, 103) gemäß einer vorgegebenen Routinglogik kommunikativ zu verbinden und durch die jeweiligen signalbasierten Kommunikationsschnittstellen (105, 107) bereitgestellte signalbasierte Kommunikationssignale gemäß einem serviceorientierten Kommunikationsprotokoll in serviceorientierte Kommunikationssignale zu transformieren sowie durch die jeweiligen serviceorientierten Kommunikationsschnittstellen (101, 103) bereitgestellte serviceorientierte Kommunikationssignale gemäß einem signalbasierten Kommunikationsprotokoll in signalbasierte Kommunikationssignale zu transformieren,
**dadurch gekennzeichnet, dass**
das eingebettete System (109) dazu konfiguriert ist, in Abhängigkeit eines von einem externen serviceorientierten Kommunikationspartner (305) angeforderten serviceorientierten Kommunikationssignals ein Schaltsignal an ein jeweiliges externes signalbasiertes Gerät (301, 401, 403, 405, 407) zu übertragen, um das jeweilige externe signalbasierte Gerät (301, 401, 403, 405, 407) zu aktivieren oder zu deaktivieren.

2. Vorrichtung (100) nach Anspruch 1,
**dadurch gekennzeichnet, dass**
das eingebettete System (109) dazu konfiguriert ist, einen Angebotskatalog (113) bereitzustellen, der eine Liste von durch die Vorrichtung (100) bereitstellbaren Services umfasst, und das eingebettete System (109) weiterhin dazu konfiguriert ist, den Angebotskatalog (113) in Abhängigkeit jeweiliger mit der Vorrichtung (100) kommunizierender externer signalbasierter Geräte unter Verwendung einer vorgegebenen Angebotszuordnungslogik dynamisch zu aktualisieren.

3. Vorrichtung (100) nach Anspruch 1 oder 2,
**dadurch gekennzeichnet, dass**
das eingebettete System (109) dazu konfiguriert ist, einen Anforderungskatalog bereitzustellen, der eine Liste von für eine vorgegebene Funktion benötigten Services umfasst, und den Anforderungskatalog in Abhängigkeit der vorgegebenen Funktion unter Verwendung einer vorgegebenen Anforderungszuordnungslogik dynamisch zu aktualisieren und jeweilige Daten von jeweiligen bereitgestellten Services an entsprechende externe signalbasierte Geräte (301, 401, 403, 405, 407) gemäß der Anforderungszuordnungslogik weiterzuleiten.

4. Vorrichtung (100) nach einem der voranstehenden Ansprüche,
**dadurch gekennzeichnet, dass**
das eingebettete System (109) dazu konfiguriert ist, jeweilige durch einen Direktverbindungskatalog vorgegebene signalbasierte Kommunikationssignale von der Anzahl signalbasierte Kommunikationsschnittstellen (105, 107) direkt zu jeweiligen gemäß der vorgegebenen Routinglogik vorgegebenen serviceorientierten Kommunikationsschnittstellen (101, 103) zu leiten.

5. Vorrichtung (100) nach einem der voranstehenden Ansprüche,
**dadurch gekennzeichnet, dass**
die Vorrichtung (100) einen Speicher (111) umfasst,
und dass das eingebettete System (109) dazu konfiguriert ist, zyklisch bereitgestellte signalbasierte Kommunikationssignale in dem Speicher (111) zwischenzuspeichern, und zeitlich asynchron zu den zyklisch bereitgestellten signalbasierten Kommunikationssignalen bereitzustellenden serviceorientierten Kommunikationssignalen jeweilige in dem Speicher (111) zwischengespeicherte signalbasierte Kommunikationssignale zuzuordnen.

6. Vorrichtung (100) nach einem der voranstehenden Ansprüche,
**dadurch gekennzeichnet, dass**
die Vorrichtung (100) eine Benutzerschnittstelle (117) zum Konfigurieren der Routinglogik und/oder der Angebotszuordnungslogik und/oder der Anforderungszuordnungslogik umfasst.

7. Vorrichtung (100) nach einem der voranstehenden Ansprüche,
**dadurch gekennzeichnet, dass**
die Vorrichtung (100) eine Schaltkommunikationsschnittstelle (201) umfasst, und dass das eingebettete System (109) dazu konfiguriert ist, das Schaltsignal über die Schaltkommunikationsschnittstelle (201) an das jeweilige externe signalbasierte Gerät (301, 401, 403, 405, 407) zu übertragen.

8. Kommunikationssystem (300, 400) für ein Fahrzeug,
wobei das Kommunikationssystem umfasst:
- eine Anzahl signalbasierter Geräte (301, 401, 403, 405, 407),
- eine Anzahl serviceorientierter Kommunikationspartner (305),
- eine Vorrichtung (100) nach einem der Ansprüche 1 bis 7,
wobei die Vorrichtung (100) dazu konfiguriert ist, die Anzahl signalbasierter Geräte (301, 401, 403, 405, 407) mit der Anzahl serviceorientierter Kommunikationspartner (305) kommunikativ zu verbinden.

9. Verfahren (500) zum Kontrollieren einer Kommunikation in einem Kommunikationssystem (300, 400), wobei das Verfahren (500) umfasst:
- Verbinden (501) einer Vorrichtung (100) nach einem der Ansprüche 1 bis 7 mit einer Anzahl signalbasierter Geräte (301, 401, 403, 405, 407),
- Verbinden (503) der Vorrichtung (100) mit einer Anzahl serviceorientierter Kommunikationspartner (305),
- Kontrollieren (505) einer Kommunikation der Anzahl serviceorientierter Kommunikationspartner (305) mit der Anzahl signalbasierter Geräte (301, 401, 403, 405, 407) mittels der Vorrichtung (100).

## Claims

1. An apparatus (100) for enabling service-oriented communication of a service-oriented device with a plurality of signal-based devices (301, 401, 403, 405, 407), said apparatus (100) comprising:
- a plurality of service-oriented communication interfaces (101, 103) for communicative linking to a plurality of external service-oriented communication partners (305),
- a plurality of signal-based communication interfaces (105, 107) for communication with a plurality of external signal-based devices (301, 401, 403, 405, 407),
- an embedded system (109),
said embedded system (109) being configured to communicatively link respective signal-based communication interfaces (105, 107) to respective service-oriented communication interfaces (101, 103) according to a predetermined routing logic and to transform signal-based communication signals provided via the respective signal-based communication interfaces (105, 107) into service-oriented communication signals according to a service-oriented communication protocol and to transform service-oriented communication signals provided via the respective service-oriented communication interfaces (101, 103) into signal-based communication signals according to a signal-based communication protocol, **characterized in that**
the embedded system (109) is configured to transmit a switching signal to a respective external signal-based device (301, 401, 403, 405, 407) in order to activate or deactivate the respective external signal-based device (301, 401, 403, 405, 407) depending on a service-oriented communication signal requested by an external service-oriented communication partner (305).

2. An apparatus (100) according to Claim 1,
**characterized in that**
the embedded system (109) is configured to provide an offer catalogue (113) containing a list of services that can be provided by the apparatus (100), and that the embedded system (109) is furthermore configured to dynamically update the offer catalogue (113) depending on the respective external signal-based devices communicating with the apparatus (100) using a predetermined offer mapping logic.

3. An apparatus (100) according to Claim 1 or Claim 2,
**characterized in that**
the embedded system (109) is configured to provide a requirement catalogue containing a list of services required for a predetermined function, and to dynamically update the requirement catalogue depending on the predetermined function using a predetermined requirement mapping logic, and to forward respective data from respective provided services to respective external signal-based devices (301, 401, 403, 405, 407) according to the requirement mapping logic.

4. An apparatus (100) according to one of the preceding claims,
**characterized in that**
the embedded system (109) is configured to route respective signal-based communication signals predetermined by a direct connection catalogue from the plurality of signal-based communication interfaces (105, 107) directly to respective service-oriented communication interfaces (101, 103) predetermined according to the predetermined routing logic.

5. An apparatus (100) according to one of the preceding claims,
**characterized in that**
the apparatus (100) comprises a memory (111),
and that the embedded system (109) is configured to temporarily store cyclically provided signal-based communication signals in the memory (111), and to assign respective signal-based communication signals temporarily stored in the memory (111) to service-oriented communication signals to be provided asynchronously in time to the cyclically provided signal-based communication signals.

6. An apparatus (100) according to one of the preceding claims,
**characterized in that**
the apparatus (100) comprises a user interface (117) for configuring the routing logic and/or the offer mapping logic and/or the requirement mapping logic.

7. An apparatus (100) according to one of the preceding claims,
**characterized in that**
the apparatus (100) comprises a switching communication interface (201), and that the embedded system (109) is configured to transmit the switching signal to the respective external signal-based device (301, 401, 403, 405, 407) via the switching communication interface (201).

8. A communication system (300, 400) for a motor vehicle, said communication system comprising:
- a plurality of signal-based devices (301, 401, 403, 405, 407),
- a plurality of service-oriented communication partners (305),
- an apparatus (100) according to one of Claims 1 to 7,
said apparatus (100) being configured to communicatively link the plurality of signal-based devices (301, 401, 403, 405, 407) to the plurality of service-oriented communication partners (305).

9. A process (500) for controlling a communication in a communication system (300, 400), said process (500) comprising:
- Connection (501) of a device (100) according to one of claims 1 to 7 to a plurality of signal-based devices (301, 401, 403, 405, 407),
- Connection (503) of the apparatus (100) to a plurality of service-oriented communication partners (305),
- Controlling (505) a communication between the plurality of service-oriented communication partners (305) and the plurality of signal-based devices (301, 401, 403, 405, 407) by means of the apparatus (100).

## Revendications

1. Dispositif (100) conçu pour permettre une communication orientée sur les services entre un appareil orienté sur les services et un certain nombre d'appareils (301, 401, 403, 405, 407) basés sur des signaux, le dispositif (100) comprenant :
- plusieurs interfaces de communication orientées sur les services (101, 103) permettant une connexion de communication avec plusieurs partenaires de communication externes orientés sur les services (305),
- plusieurs interfaces de communication basées sur des signaux (105, 107) permettant la communication avec plusieurs appareils externes (301, 401, 403, 405, 407) basés sur des signaux,
- un système embarqué (109),
sachant que le système embarqué (109) est configuré de manière à connecter en vue d'une communication les différentes interfaces de communication basées sur des signaux (105, 107) aux interfaces de communication orientées sur les services (101, 103) selon une logique de routage prédéfinie et de manière à transformer les signaux de communication basés sur des signaux fournis par les interfaces de communication basées sur des signaux (105, 107) en signaux de communication orientés sur les services selon un protocole de communication orienté sur les services, ainsi que de manière à convertir les signaux de communication orientés sur les services fournis par les interfaces de communication orientées sur les services (101, 103) en signaux de communication basés sur les signaux conformément à un protocole de communication basé sur les signaux,
**caractérisé en ce que**
le système embarqué (109) est configuré de manière à transmettre, en fonction d'un signal de communication orienté sur les services demandé par un partenaire de communication externe orienté sur les services (305), un signal de commutation à un appareil externe basé sur des signaux (301, 401, 403, 405, 407) afin d'activer ou de désactiver l'appareil externe basé sur des signaux correspondant (301, 401, 403, 405, 407).

2. Dispositif (100) selon la revendication 1,
**caractérisé en ce que**
le système intégré (109) est configuré de manière à fournir un catalogue d'offres (113) comprenant une liste de services pouvant être fournis par le dispositif (100) et **en ce que** le système intégré (109) est en outre configuré pour mettre à jour dynamiquement le catalogue d'offres (113) en fonction des appareils externes basés sur des signaux communiquant avec le dispositif (100) selon une logique d'attribution d'offres prédéfinie.

3. Dispositif (100) selon la revendication 1 ou 2,
**caractérisé en ce que**
le système intégré (109) est configuré de manière à fournir un catalogue d'exigences comprenant une liste de services nécessaires pour une fonction prédéfinie et de manière à mettre à jour dynamiquement le catalogue d'exigences en fonction de la fonction prédéfinie à l'aide d'une logique d'attribution des exigences prédéfinie et à transmettre les données respectives des services correspondants fournis aux appareils externes basés sur des signaux (301, 401, 403, 405, 407) conformément à la logique d'attribution des exigences.

4. Dispositif (100) selon l'une des revendications précédentes,
**caractérisé en ce que**
le système embarqué (109) est configuré de manière à acheminer les signaux de communication basés sur des signaux prédéfinis par un catalogue de connexions directes depuis le nombre d'interfaces de communication basées sur des signaux (105, 107) directement vers les interfaces de communication orientées sur les services (101, 103) prédéfinies conformément à la logique de routage prédéfinie.

5. Dispositif (100) selon l'une des revendications précédentes,
**caractérisé en ce que**
le dispositif (100) comporte une moyen de stockage (111),
et **en ce que** le système intégré (109) est configuré de manière à stocker temporairement dans le moyen de stockage (111) des signaux de communication basés sur des signaux fournis de manière cyclique et d'attribuer des signaux de communication basés sur des signaux mis en mémoire tampon dans le moyen de stockage (111) à des signaux de communication orientés sur les services à fournir de manière asynchrone par rapport aux signaux de communication basés sur des signaux fournis de manière cyclique.

6. Dispositif (100) selon l'une des revendications précédentes,
**caractérisé en ce que**
le dispositif (100) comprend une interface utilisateur (117) permettant de configurer la logique de routage et/ou la logique d'attribution d'offres et/ou la logique d'attribution d'exigences.

7. Dispositif (100) selon l'une des revendications précédentes,
**caractérisé en ce que**
le dispositif (100) comprend une interface de communication de commutation (201) et **en ce que** le système embarqué (109) est configuré de manière à transmettre le signal de commutation via l'interface de communication de commutation (201) à l'appareil externe basé sur des signaux correspondant (301, 401, 403, 405, 407).

8. Système de communication (300, 400) pour un véhicule automobile, le système de communication comprenant :
- un certain nombre d'appareils basés sur des signaux (301, 401, 403, 405, 407),
- un certain nombre de partenaires de communication orientés sur les services (305),
- un dispositif (100) selon l'une des revendications 1 à 7,
sachant que le dispositif (100) est configuré de manière à connecter en vue d'établir une communication le nombre d'appareils basés sur des signaux (301, 401, 403, 405, 407) au nombre de partenaires de communication orientés sur les services (305).

9. Méthode (500) permettant de contrôler une communication dans un système de communication (300, 400), la méthode (500) comprenant :
- la connexion (501) d'un dispositif (100) selon l'une des revendications 1 à 7 à un nombre d'appareils basés sur des signaux (301, 401, 403, 405, 407),
- la connexion (503) du dispositif (100) à un certain nombre de partenaires de communication orientés sur les services (305),
- le contrôle (505) d'une communication du nombre de partenaires de communication orientés sur les services (305) avec le nombre d'appareils basés sur des signaux (301, 401, 403, 405, 407) par l'intermédiaire du dispositif (100).
